## Europäisches Patentamt

## European Patent Office

## Office européen des brevets

(11) Veröffentlichungsnummer: **0 185 648**

**A2**

(12) # EUROPÄISCHE PATENTANMELDUNG

(21) Anmeldenummer: **85890307.3**

(22) Anmeldetag: **12.12.85**

(51) Int. Cl.⁴: **C 02 F 11/00**
**C 02 F 9/00, C 02 F 11/18**
**C 02 F 1/62, B 01 D 47/00**

(30) Priorität: **17.12.84 AT 4000/84**

(43) Veröffentlichungstag der Anmeldung:
**25.06.86 Patentblatt 86/26**

(84) Benannte Vertragsstaaten:
**BE CH DE FR GB IT LI LU NL SE**

(71) Anmelder: **VOEST-ALPINE Aktiengesellschaft**
**Friedrichstrasse 4**
**A-1011 Wien(AT)**

(72) Erfinder: **Janusch, Alois, Dipl.-Ing.**
**Leopersdorf 109**
**A-8652 Kindberg-Aumühl(AT)**

(72) Erfinder: **Lugscheider, Walter, Dr. Dipl.-Ing.**
**Biesenfeldweg 2**
**A-4040 Linz(AT)**

(72) Erfinder: **Ludewig, Fritz, Dr. Dipl.-Ing.**
**Lorberaustrasse 13**
**A-8704 Leoben(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Verfahren zur Entsorgung von Klärschlamm aus einer biologischen Abwasserreinigungsanlage.**

(57) In einem Verfahren zur Entsorgung von Klärschlamm aus einer biologischen Abwasserreinigungsanlage, bei welchem der eingedickte Schlamm weiter entwässert und in einer Zentrifuge (15) unter Anwendung von Sattdampf, vorzugsweise im Druckbereich von 1 – 15 bar bei einer Temperatur von 100°C – 200°C, zumindest teilweise thermisch zersetzt wird, wird das Zentrat der unter Sattdampf gesetzten Zentrifuge (15) über eine Schleuse (18) ausgetragen und unmittelbar anschließend einer sulfidischen Schwermetallfällung (19) unterworfen. Die in der Zentrifuge (15) abgetrennten Feststoffe werden dabei gleichzeitig über Schleusen (28) ausgetragen und gegebenenfalls einer Nachtrocknung (33) und wenigstens teilweise einer Verbrennung, beispielsweise einer Wirbelschichtverbrennung (23), zur Dampferzeugung (17) für die Zentrifuge (15) unterworfen, wobei der Dampf vollständig im Kreislauf geführt wird und der Schleusenabdampf zur Lufterwärmung (30) herangezogen wird, worauf gebildetes Kondensat dem Vorklärbecken (5) der Abwasserreinigungsanlage zugeführt wird, wodurch eine Verringerung des Energiebedarfes und eine verringerte Umweltbeanspruchung erzielt wird.

EP 0 185 648 A2

## Verfahren zur Entsorgung von Klärschlamm aus einer biologischen Abwasserreinigungsanlage

Die Erfindung bezieht sich auf ein Verfahren zur Entsorgung von Klärschlamm aus einer biologischen Abwasserreinigungsanlage, bei welchem der eingedickte Schlamm weiter entwässert und in einer Zentrifuge unter Anwendung von Sattdampf, vorzugsweise im Druckbereich von 1 - 15 bar bei einer Temperatur von 100°C - 200°C, zumindest teilweise thermisch zersetzt wird. Ein derartiges Verfahren ist beispielsweise der Europäischen Patentanmeldung 119 987 zu entnehmen. Durch die gleichzeitige Anwendung von Sattdampf bei einer mechanischen Beanspruchung durch Zentrifugieren wird nicht nur die Entwässerungsleistung wesentlich verbessert, sondern gleichzeitig auch eine Reihe von chemischen Umwandlungen vorgenommen, welche zu einer Verbesserung des anfallenden Produktes führt. Insbesondere ermöglicht eine derartige thermische Umsetzung bei einer Verbrennung oder Verhaldung schädliche Bestandteile zu eliminieren und erleichtert die nachfolgende Trennung in einzelne gesondert verwertbare Verfahrensprodukte.

Die Entsorgung des von in mechanisch-biologischen Kläranlagen anfallenden Klärschlammes stellt ein weltweites Problem dar. In der Bundesrepublik Deutschland fallen z. B. jährlich aus kommunalen Kläranlagen rd. 40 Mio m³ und aus industriellen Kläranlagen 20 Mio m³ Klärschlamm an. Dieser Klärschlamm enthält 3 - 5 % Trockensubstanz, die vorwiegend aus organischer Substanz besteht. Die bodenverbessernde und düngende Wirkung dieser Substanz wird in der Landwirtschaft genutzt. Die Verwertung wird aber durch die im Klärschlamm enthaltenen Schwermetalle, wie Blei, Zink, Kadmium u.a., sowie durch das Vorhandensein von Krankheitserregern, wie Bakterien, Viren, Wurmeiern u.a., stark eingeschränkt. Auch ist das Ausbringen von Klärschlamm saisonell eingeschränkt. Andere Entsorgungsmethoden stellen das Deponieren zu Lande oder das Verkippen ins Meer dar. Ersteres setzt eine weitgehende Entwässerung des Schlammes, die nur durch Zusatz von den Wassergehalt senkenden Stoffen, wie z. B. Kalk, erreicht werden kann, voraus und schließt eine Verunreinigung des Grundwassers nicht aus; letzteres kann zur Verseuchung von Fischereigebieten führen. Die stärkste Volumsreduzierung des Schlammes wird durch eine Verbrennung oder eine Pyrolyse erreicht, bei welcher bislang jedoch die Verwendung von Zusatzbrennstoffen notwendig ist, was zu erhöhten Betriebskosten führt. Die Erfindung zielt nun darauf ab, ausgehend von der eingangs genannten Verfahrensweise zum Entwässern von Schlämmen eine Entsorgung zu schaffen, mit welcher bei möglichst geringem externen Energieaufwand eine weitere Minimierung der nicht unmittelbar weiterverwertbaren Produkte erzielt wird. Zur Lösung dieser Aufgabe besteht die Erfindung im wesentlichen darin, daß das Zentrat der unter Sattdampf gesetzten Zentrifuge über eine Schleuse ausgetragen und unmittelbar anschließend einer sulfidischen Schwermetallfällung unterworfen wird, daß die in der Zentrifuge abgetrennten Feststoffe über Schleusen ausgetragen und gegebenenfalls einer Nachtrocknung und wenigstens teilweise einer Verbrennung, beispielsweise einer Wirbelschichtverbrennung, zur Dampferzeugung für die Zentrifuge unterworfen werden, wobei der Dampf vollständig im Kreislauf geführt wird und der Schleusenabdampf zur Lufterwärmung herangezogen wird, worauf gebildetes Kondensat dem Vorklärbecken der Abwasserreinigungsanlage zugeführt wird. Dadurch, daß das Zentrat der unter Sattdampf gesetzten Zentrifuge über eine Schleuse ausgetragen und unmittelbar anschließend einer sulfidischen Schwermetallfällung unterworfen wird, wird hier bereits die Restwärme des Zentrates ausgenutzt. Eine Sulfidfällung mit Natriumsulfid kann bei 90° Celsius besonders rasch und weitgehend vollständig vorgenommen werden, wobei der sich bildende Schwermetallschlamm nach seiner Ausschleusung und Entwässerung einer Sonderdeponie oder weiteren Verarbeitung zugeführt werden kann. Dadurch, daß die aus der Zentrifuge über Schleusen ausgetragenen Feststoffe zumindest teilweise einer Verbrennung im Rahmen des Entsorgungssystems unterworfen werden, wofür beispielsweise eine Wirbelschichtverbrennung vorgenommen werden kann, wird die nötige Energie für die Dampferzeugung geliefert, wobei dieser Dampf der Zentrifuge zugeführt wird. Da bei Verbrennung der gesamten Schlammenge nur ein Teil der erzeugten Dampfmenge für die Zentrifugenversorgung nötig ist, kann der überwiegende Teil für Fremdzwecke (z.B. Energie- bzw. Wärmeerzeugung) genützt werden. Der Dampf innerhalb des Systems wird vollständig im Kreislauf geführt, und eine weitere Verringerung des Engergiebedarfes läßt sich dadurch erzielen, daß der Schleusenabdampf zur Lufterwärmung herangezogen wird. Die erwärmte Luft kann in der Folge zur Nachtrocknung des aus der Zentrifuge ausgetragenen Produktes, bevor dieses der Verbrennung zugeführt wird oder zur Luftvorwärmung, beispielsweise für den Einsatz als Verbrennungsluft, herangezogen werden. Das gebildete Kondensat aus dem Schleusenabdampf kann im Rahmen der erfindungsgemäßen Kombination einer biologischen Abwasserkläranlage mit den übrigen Aggregaten dem Vorklärbecken der Abwasserreinigungsanlage rückgeführt werden, sodaß auch hier keine zusätzliche Belastung der Umwelt auftritt.

Mit dem erfindungsgemäßen Verfahren zur Entsorgung von Klärschlamm kann aufgrund der im Verfahren enthaltenen Verzweigungen je nach der Aufgabenstellung der Anteil an für Düngezwecke oder Deponie geeigneten und an für die Verbrennung bzw. Pyrolyse geeigneten Endprodukten eingestellt werden.

In vorteilhafter Weise wird das erfindungsgemäße Verfahren dadurch weitergebildet, daß die durch den Schleusenabdampf vorgewärmte Luft teilweise zur Nachtrocknung der Feststoffe aus der Zentrifuge verwendet wird, und teilweise durch die Abwärme der Verbrennung weiter erwärmt wird und als heiße Verbrennungsluft der Verbrennung der nachgetrockneten Feststoffe zugeführt wird. Hiebei kann aus der Zentrifuge $CO_2$ abgeführt werden, wodurch eine intensive Aufheizung durch Dampf in der Zentrifuge sichergestellt wird.

Die aus dem System abgezogene Abluft kann in vorteilhafter Weise einer Desodorierung unterworfen werden. Besonders vorteilhaft ist hiebei, daß die großteils im Kreislauf geführte Luft aus der Abwasserreinigungsanlage abgezogen werden kann. Auf diese Weise wird die Geruchsbelästigung, welche üblicherweise mit großen Klärbecken einhergeht, wesentlich herabgesetzt. Zu diesem Zweck wird vorgeschlagen, die Kühlung des Zentrats nach der Schwermetallfällung mit einem Teil der aus der Abwasserreinigungsanlage insbesondere oberhalb des Klärbeckens abgezogenen Luft vorzunehmen, welche anschließend durch Schleusenabdampf und Abwärme der Verbrennung als heiße Verbrennungsluft bei der Verbrennung neuerlich eingesetzt wird.

Um die Schadstoffemission bei der Verbrennung von aus der Zentrifuge nach einer Nachtrocknung ausgetragenen Feststoffen zu verringern und auch hier die Energiebilanz zu verbessern, wird vorzugsweise so vorgegangen, daß die Rauchgase der Verbrennung nach der zweiten Luftvorwärmungsstufe eine Rauchgasreinigung, insbesondere einer Rauchgaswäsche und/oder einer Naßentstaubung, zugeführt werden, wobei das Waschwasser nach einer Neutralisation der Abwasserreinigung, insbesondere dem Sandfang derselben oder dem Vorklärbecken, zugeführt wird. Auch hier ergibt sich aufgrund der kombinierten Anwendung einer Abwasserreinigungsanlage sowie der mit Dampfdruck betriebenen Zentrifuge gemeinsam mit einer das Verfahrensprodukt der mit Dampfdruck betriebenen Zentrifuge verbrennenden Anlage eine weitere Optimierung bzw. Verringerung des Energieverbrauches ohne zusätzliche Umweltbelastung, da die Waschwässer neuerlich der in der Anlage enthaltenen Abwasserreinigungsstufe rückgeführt werden können.

- 5 -

Auch das Zentrat, welches nach Abtrennung der Schwermetalle vorliegt, kann innerhalb der gleichen Anlage ohne neuerliche Umweltbelastung aufgearbeitet werden, wofür in vorteilhafter Weise vorgeschlagen wird, dieses Zentrat einer Kühlung zu unterwerfen und anschließend entweder eine Faulung vorzunehmen, wobei brennbare Gase der Verbrennung und der verbleibende Rückstand dem Vorklärbecken der Abwasserreinigungsanlage rückgeführt werden, oder aber das gekühlte Zentrat unmittelbar der Abwasserreinigungsanlage rückzuführen.

Auch die Waschwässer, wie sie für die Reinigung der Rauchgase erforderlich sind, können unmittelbar aus dem Verfahren selbst gewonnen werden, und es wird zu diesem Zweck vorgeschlagen, daß ein Teil des geklärten Abwassers nach einer Konditionierung der Rauchgaswäsche bzw. dem Naßentstauber für die Rauchgasreinigung zugeführt wird.

Bei einer derartigen Rauchgasreinigung werden gleichzeitig Gaskomponenten, wie $HCl$, $Cl_2$, oder $SO_2$ mit ausgewaschen. Nach einer Neutralisation dieses Waschwassers kann dieses neuerlich geklärt und der Schlamm gemeinsam mit dem Schwermetallschlamm entwässert und einer Sonderdeponie oder weiteren Verwertung zugeführt werden. Geklärtes Abwasser kann nach der Neutralisation in die Abwasserreinigunsanlage zurückgeführt werden.

Naturgemäß kann auch eine konventionelle Reinigung der gekühlten Abgase zusätzlich erfolgen, bei welcher beispielsweise Kalk und Kalkmilch als Neutralisationsmittel eingesetzt werden. Entstehendes $CaSO_3$-$CaSO_4$ sowie der Kalkmilch enthaltende Schlamm können teilweise neutralisiert und vor dem Sandfang der Kläranlage rückgeführt werden. Eine gewisse Menge an $Ca(OH)_2$ ist prozeßtechnisch günstig, da es das im Abwasser enthaltene $CO_2$ bindet und den biologisch aktiven Phosphor ausfällt.

- 6 -

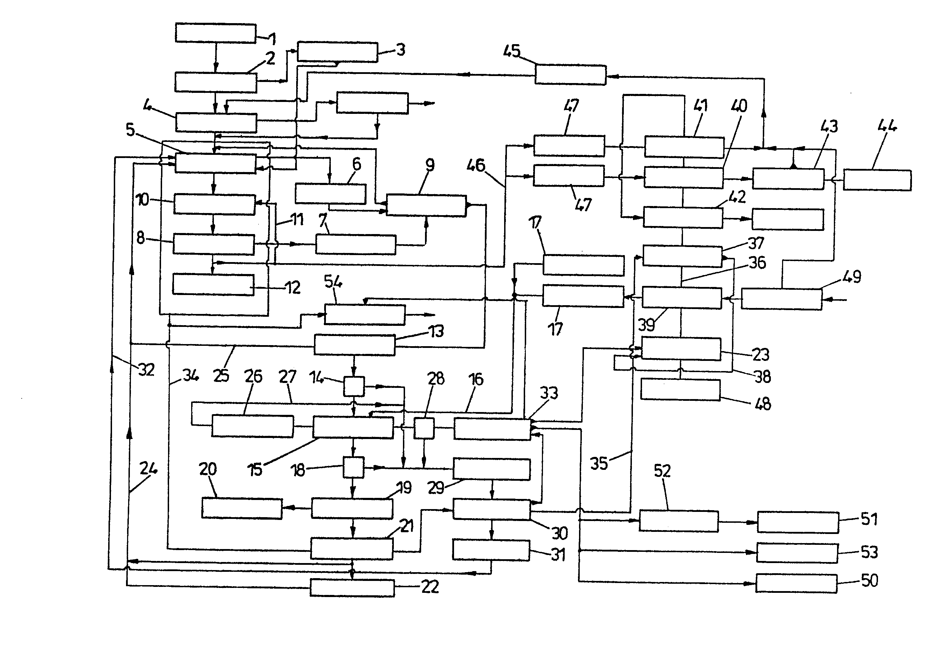

Die Erfindung wird nachfolgend anhand eines in der Zeichnung schematisch dargestellten Ausführunsbeispieles einer für die Durchführung des Verfahrens geeigneten Anlage näher erläutert.

In der Zeichnung ist die Zuführung von Rohabwasser, beispielsweise von kommunalem oder gewerblichem Abwasser mit 1 angedeutet. In der Abwasserreinigungsanlage bzw. Kläranlage erfolgt eine Vorreinigung 2 mittels Rechen, um gröbere Fremdstoffe, wie Holzstücke, Lumpen, Papier oder dergleichen abzutrennen. Diese Stoffe können nach einer mit 3 angedeuteten Zerkleinerung des Rechengutes dem Vorklärbecken zugeführt werden. In der Folge ist ein Sandfang 4 vorgesehen, worauf das eingebrachte Rohabwasser in ein Vorklärbecken 5 geleitet wird. Aus diesem Vorklärbecken wird Vorklärschlamm abgezogen, was mit 6 angedeutet ist. Dieser Vorklärschlamm wird gemeinsam mit einem mit 7 angedeuteten Überschußschlamm aus einem Nachklärbecken 8 einem Eindicker 9 zur Verfügung gestellt.

Zwischen Vorklärbecken 5 und Nachklärbecken 8 erfolgt eine biologische Abwasseraufbereitung in Form eines Belebtschlammbeckens 10. Ein Teil des aus dem Nachklärbecken abgezogenen Wassers kann über die Leitung 11 diesem Belebtschlammbecken 10 rückgeführt werden. Der Großteil des geklärten Wassers kann in den Vorfluter 12 gelangen.

Die mit 6 und 7 bezeichneten Zwischenspeicher für Vorklärschlamm und Überschußschlamm erlauben die qualitäts- und mengenmäßig abhängige Zuführung dieser Materialien an den Eindicker 9, wodurch eine gewisse Vergleichmäßigung der Qualität des der Vorentwässerung, insbesondere einer Siebbandpresse, 13 zur Verfügung gestellten Materiales erfolgt. Nach dem Verlassen der Vorentwässerung 13 gelangt der dem Eindicker entnommene Schlamm über eine Eintragsschleuse 14 in eine Zentrifuge 15, welche über eine Leitung 16 mit Dampf beaufschlagt ist. Die Dampferzeugung ist hiebei mit 17 angedeutet. Das Zentrat dieser Zentrifuge wird über eine Schleuse 18 ausgetragen und unmittelbar anschließend einer Schwermetallfällung bei 19 unterworfen. Der sulfidische Niederschlag dieser Fällung kann auf eine Sonderdeponie 20 geleitet werden oder aber einer weiteren Aufarbeitung zur Auftrennung der Schwermetalle unterworfen werden. Das verbleibende Zentrat wird in einer Kühlstufe 21 abgekühlt, und in der Folge einer Faulung 22 unterworfen. Hiebei gebildete Faulgase können einer Verbrennungseinrichtung, insbesondere einem Wirbelschichtofen, 23 zugeführt werden. Die verbleibende flüssige Phase kann über eine Leitung 24 dem Vorklärbecken 5 rückgeführt werden. Über eine Leitung 25 ist auch eine Rückführung des in der mechanischen Vorentwässerung 13 abgeschiedenen Wassers zum Vorklärbecken 5 vorgesehen.

Aus der Dampfzentrifuge wird, wie mit 26 angedeutet, $CO_2$ abgeführt, wobei dieses $CO_2$ über eine Leitung 27 dem Schleusenabdampf beigemengt werden kann. Der Schleusenabdampf aus den Schleusen 14 und 18 sowie der Austragsschleuse 28 für die in der Zentrifuge abgeschiedenen Feststoffe, wird bei 29 gesammelt und zur Luftvorwärmung bei 30 herangezogen. Das aufgrund der Vorwärmung auftretende Kondensat wird bei 31 gesammelt und über eine Leitung 32 dem Vorklärbecken rückgeführt. Die für eine Nachtrocknung 33 ebenso wie als Verbrennungsluft für die Verbrennung 23 erforderliche Luft, wird über eine Leitung 34 über dem Vorklärbecken, dem Belebtschlammbecken und dem Nachklärbecken abgezogen, sodaß eine Geruchsbelästigung in diesem Bereich eliminiert wird. Diese Luft wird zunächst zur Kühlung des Zentrats bei 21 verwendet und gelangt nach der ersten Luftvorwärmung 30 zu der bereits genannten Nachtrocknung 33 für die aus der Zentrifuge ausgetragenen Feststoffe. Ein weiterer Teil dieser Luft wird nach der ersten Luftvorwärmung über eine Leitung 35 einer in die Abgas- bzw. Rauchgasleitung 36 eingeschalteten zweiten

- 8 -

Luftvorwärmung 37 unterworfen, worauf die auf diese Weise nochmals erhitzte Luft über eine Leitung 38 der Verbrennung wenigstens eines Teiles der aus der Nachtrocknung 33 abgezogenen Feststoffe zur Verfügung gestellt wird. In die Rauchgasleitung 36 ist ein weiterer Wärmetauscher 39 eingeschaltet, welcher den Energieaufwand für die Dampferzeugung 17 liefert. Die nach Passieren der zweiten Luftvorwärmung 37 vorliegenden Rauchgase werden einer Naßentstaubung 40 und einer Rauchgaswäsche 41 unterworfen, bevor sie neuerlich über einen Wärmetauscher 42 geführt werden, um erwärmt ins Freie abgegeben zu werden. Die aus der Naßentstaubung 40 abgezogenen Schlämme können einer Entwässerung bei 43 unterworfen werden und in der Folge einer Sonderdeponie 44 zugeführt werden. Ein Teil der entwässerten Feststoffe aus der Entwässerung 43 kann nach einer Neutralisation bei 45 dem Sandfang 4 rückgeleitet werden. Für die Rauchgaswäsche 41 ebenso wie für die Naßentstaubung 40 kann aus dem Nachklärbecken 8 abgezogenes geklärtes Abwasser eingesetzt werden, wofür eine Leitung 46 vorgesehen ist. Das geklärte Abwasser wird jeweils einer entsprechenden Konditionierung 47 für den gewünschten Verwendungszweck unterworfen, bevor es in der Rauchgaswäsche 41 bzw. im Naßentstauber 40 eingesetzt wird.

Aus der Verbrennung 23 wird naturgemäß auch Asche abgezogen, welche einer Deponie zugeführt werden kann. Dies wird wird mit 48 angedeutet.

Die Kesselspeisewasseraufbereitung ist mit 49 bezeichnet.

Neben der Möglichkeit der Verbrennung zumindest eines Teiles der aus der Nachtrocknung 33 abgezogenen Feststoffe kann naturgemäß, je nach Anfall an Feststoffen und Energiebedarf der Einrichtung, eine weitere Teilmenge einer externen Verbrennung, wie sie durch 50 angedeutet ist, zugeführt oder zur Herstellung von Düngemitteln, wie sie durch 51 angedeutet ist, herangezogen werden. Für die Herstellung von Düngemitteln erfolgt in der Regel eine mit 52 bezeichnete vorgeschaltete Agglomerierung. Alternativ besteht je nach Gefährlichkeit der verbleibenden Stoffe auch die Möglichkeit, die Feststoffe einer Deponie 53 zuzuführen.

Bei einer derartigen Anlage weist der aus der mechanischen Vorentwässerung 13 abgezogene Schlamm in der Regel einen Trockensubstanzgehalt von 20 - 30 Gew.-% auf, wenn eine Siebbandpresse eingesetzt wird. Eine derartige Siebbandpresse hat den Vorzug unmittelbar ein Produkt zu liefern, welches sich besonders gut für den Einsatz in der nachfolgenden Zentrifuge, welche mit einem Sattdampfdruck von 2 - 35 bar betrieben werden kann, eignet. Je nach angewandtem Sattdampfdruck wird ein Trockensubstanzgehalt in der Höhe von 50 - 80 Gew.-% nach der Zentrifuge erhalten. Durch eine Nachtrocknung in bekannnter Weise unter Verwendung von Warmluft, kann bedarfsweise der Trockensubstanzgehalt weiter erhöht werden.

Der getrocknete Schlamm hat aufgrund der Sattdampfbehandlung und der damit verbundenen Hydrolyse wasserlösliche Schwermetalle verloren und ist daher für die weitere Verbrennung in der Kläranlage mit Dampferzeugung für die Zentrifuge mit oder ohne Abwärmenutzung ohne weiteres einsetzbar. Ebenso ist aufgrund dieser Abtrennung der Schwermetalle ohne weiteres die Weiterverarbeitung für Düngezwecke möglich.

Für die Verbrennung des Schlammes wird in konventioneller Weise eine Wirbelschichtverbrennungsanlage bevorzugt, wobei vorgewärmte Luft eingesetzt wird. Mit der Verbrennung des getrockneten Schlammes kann eine weit über den Bedarf der Sattdampfzentrifuge hinausgehende Dampfmenge erzeugt werden, die für die Beheizung der Anlage oder auch für Fremdzwecke verwendet werden kann.

In der Zeichnung sind zwei Dampferzeugungsanlagen vorgesehen, wobei eine dieser Dampferzeugungsanlagen in erster Linie für die Inbetriebsetzung mit Erdgas, Öl oder Strom versorgt werden kann.

Die Naßentstaubung kann in konventioneller Weise mittels Venturiwäschern vorgenommen werden, wobei gereinigtes Abgas aus der Kläranlage genutzt wird. Vor allen Dingen die Möglichkeit, die übelriechende Abluft der Abwasserreinigungsanlagen für die Zwecke der Gesamtanlage auszunützen, das durch Überdachung der verschiedenen Becken und Absaugung der Abluft erfolgen kann, bildet eine weitere Möglichkeit, die Umweltbelastung herabzusetzen. Der über den als Verbrennungsluft benötigten Anteil hinausgehende überschüssige Teil kann einer absorptiven Reinigung unter Verwendung von gereinigtem Abwasser zugeführt werden, wobei diese Desodorierung mit 54 bezeichnet ist.

0185648

- 11 -

Patentansprüche:

1. Verfahren zur Entsorgung von Klärschlamm aus einer biologischen Abwasserreinigungsanlage, bei welchem der eingedickte Schlamm weiter entwässert und in einer Zentrifuge (15) unter Anwendung von Sattdampf, vorzugsweise im Druckbereich von 1 - 15 bar bei einer Temperatur von 100°C - 200°C, zumindest teilweise thermisch zersetzt wird, dadurch gekennzeichnet, daß das Zentrat der unter Sattdampf gesetzten Zentrifuge (15) über eine Schleuse (18) ausgetragen und unmittelbar anschließend einer sulfidischen Schwermetallfällung (19) unterworfen wird, daß die in der Zentrifuge (15) abgetrennten Feststoffe über Schleusen (28) ausgetragen und gegebenenfalls einer Nachtrocknung (33) und wenigstens teilweise einer Verbrennung, beispielsweise einer Wirbelschichtverbrennung (23), zur Dampferzeugung (17) für die Zentrifuge (15) unterworfen werden, wobei der Dampf vollständig im Kreislauf geführt wird und der Schleusenabdampf zur Lufterwärmung (30) herangezogen wird, worauf gebildetes Kondensat dem Vorklärbecken (5) der Abwasserreinigungsanlage zugeführt wird.

2. Verfahren nach Anspruch 1, dadurch gekennzeichnet, daß die durch den Schleusenabdampf vorgewärmte Luft teilweise zur Nachtrocknung (33) der Feststoffe aus der Zentrifuge (15) verwendet wird und teilweise durch die Abwärme der Verbrennung (37) weiter erwärmt wird und als heiße Verbrennungsluft der Verbrennung (23) der nachgetrockneten Feststoffe zugeführt wird.

3. Verfahren nach Anspruch 1 oder 2, dadurch gekennzeichnet, daß aus der Zentrifuge (15) $CO_2$ abgeführt wird.

4. Verfahren nach einem der Ansprüche 1, 2 oder 3, dadurch gekennzeichnet, daß die Abluft einer Desodorierung (54) unterworfen wird.

5. Verfahren nach einem der Ansprüche 1 bis 4, dadurch gekennzeichnet, daß die Rauchgase der Verbrennung nach der zweiten Luftvorwärmungsstufe (37) eine Rauchgasreinigung, insbesondere einer Rauchgaswäsche (41) und/oder einer Naßentstaubung (40), zugeführt werden, wobei das Waschwasser nach einer Neutralisation (45) der Abwasserreinigung, insbesondere dem Sandfang (4) derselben oder dem Vorklärbecken (5), zugeführt wird.

6. Verfahren nach einem der Ansprüche 1 bis 5, dadurch gekennzeichnet, daß das Zentrat nach der Abtrennung (19) der Schwermetalle und einer Kühlung (21) entweder einer Faulung (22) unterworfen wird, wobei brennbare Gase der Verbrennung (23) und der verbleibende Rückstand dem Vorklärbecken (5) rückgeführt, oder unmittelbar der Abwasserreinigungsanlage rückgeführt wird.

7. Verfahren nach einem der Ansprüche 1 bis 6, dadurch gekennzeichnet, daß die Kühlung (21) des Zentrates nach der Schwermetallfällung (19) mit der aus der Abwasserreinigungsanlage, insbesondere oberhalb der Klärbecken (5, 8, 10), abgezogenen Luft vorgenommen wird, welche anschließend durch Schleusenabdampf und Abwärme der Verbrennung als heiße Verbrennungsluft eingesetzt wird.

8. Verfahren nach einem der Ansprüche 1 bis 7, dadurch gekennzeichnet, daß ein Teil des geklärten Abwassers nach einer Konditionierung (47) der Rauchgaswäsche (41) bzw. dem Naßentstauber (40) für die Rauchgasreinigung zugeführt wird.